# EUROPÄISCHE PATENTSCHRIFT

(11) **EP 0 650 409 B1**
(45) Veröffentlichungstag und Bekanntmachung des Hinweises auf die Patenterteilung: **13.05.1998**
(21) Anmeldenummer: 93903931.9
(22) Anmeldetag: 09.02.1993
(51) Int. Cl.: B29C 47/92, G01B 17/02

(54) **VERFAHREN ZUM REGELN DER EINZELNEN SCHICHTDICKEN EINER KOEXTRUDIERTEN MEHRSCHICHTIGEN KUNSTSTOFFBAHN**
PROCESS FOR REGULATING THE THICKNESS OF INDIVIDUAL LAYERS OF A CO-EXTRUDED MULTILAYERED PLASTIC WEB
PROCEDE POUR REGULER L'EPAISSEUR DES COUCHES INDIVIDUELLES D'UNE BANDE PLASTIQUE MULTICOUCHE CO-EXTRUDEE

(30) Priorität: 10.02.1992 DE 4203755
(43) Veröffentlichungstag der Anmeldung: 03.05.1995
(73) Patentinhaber: Reifenhäuser GmbH & Co., Maschinenfabrik, 53844 Troisdorf (DE)
(72) Erfinder: KNOBLAUCH, Klaus-Dieter, D-3052 Bad Nenndorf (DE); BARTHELEMY, Gerd, D-5210 Troisdorf (DE)
(74) Vertreter: Müller-Gerbes, Margot, Dipl.-Ing.
(86) Internationale Anmeldenummer: EP9300301
(87) Internationale Veröffentlichungsnummer: WO9315897

(56) Entgegenhaltungen:
- EP-A- 0 405 058
- DE-A- 3 107 701
- DE-A- 3 741 793
- US-A- 5 038 615
- PLASTVERARBEITER Bd. 43, Nr. 8, August 1992, SPEYER, DE Seiten 37 - 43 , XP305384 E. KRÜGER ET AL. 'Das Wie und Wo von Ultraschall bei der Automatisierung'
- KUSTSTOFFE Bd. 77, Nr. 10, Oktober 1987, MÜNCHEN, DE Seiten 936 - 939 K.W. BUCHSCHEID ET AL. 'Automatisierte Wanddickenmessung im Blaswerkzeug'
- PLASTICS ENGINEERING Bd. 46, Nr. 3, März 1990, BROOKFIELD, CT, US Seiten 75 - 77 , XP171932 S. TORMALA 'Measuring Layer Thickness in Coextrusions by Interferometry'
- PATENT ABSTRACTS OF JAPAN vol. 5, no. 175 (P-88)(847) 11. November 1981 & JP,A,56 103 307 (SHOWA DENSEN DENRAN K.K.) 18. August 1981

## Beschreibung

Die Erfindung betrifft ein verfahren zum Regeln der einzelnen Schichtdicken von mehreren Schichten einer mehrschichtigen durch Koextrusion herzustellenden Kunststoffbahn, wobei mindestens zwei Kunststoffschmelzeströme getrennt in einem der verschiedenen Extrudern aufgeschmolzen und die einzelnen Schmelzeströme in einem Adapter zusammengeführt und zu einem Strang schichtweise aufeinandergelegt werden und der so gebildete mehrschichtige Strang einem Breitschlitzwerkzeug zur Ausformung der mehrschichtigen Kunststoffbahn zugeführt wird und Mittel vorgesehen sind, um den Fluß der einzelnen Schmelzeströme unmittelbar vor dem Zusammenführen der Schmelzeströme im Adapter durch verändern der Strömungsquerschnitte zu steuern, um sowohl die Dickenverteilung der von jedem Schmelzestrom gebildeten und beim Zusammenführen auf den Strang aufgelegten Schicht als auch die Fließgeschwindigkeit zu beeinflussen.

Mehrschichtige Kunststoffbahnen, worunter sowohl Folien als auch Platten zu verstehen sind, können nach verschiedenen Mehrschicht-Extrusionsverfahren hergestellt werden. Beim Extrusionsbeschichten werden die verschiedenen Schichten außerhalb eines Werkzeuges aufeinandergelegt. Beim Koextrudieren wird das verfahren durch Zusammenführen der einzelnen Schmelzeströme innerhalb des Breitschlitzwerkzeuges und das Zusammenführen der einzelnen Schmelzeströme vor dem Erreichen des Breitschlitzwerkzeuges mit Hilfe eines Adapters unterschieden. Koextrusionswerkzeuge zum Herstellen von Flachfolien für den Verpackungsbereich werden beispielsweise in der Zeitschrift "Kunststoffe 74. Jahrgang 1988, Heft 5, Seite 393-397" näher erläutert.

Bei der Herstellung von mehrschichtigen Kunststoffbahnen stellt sich das Problem, eine gleichmäßige Dickenverteilung und Schichtdicke der einzelnen Schmelzeströme und Schichten zu erreichen. Üblicherweise werden Dickenmessungen an der extrudierten mehrschichtigen das Breitschlitzwerkzeug bereits verlassen habenden Kunststoffbahn durchgeführt, um dann mit den erhaltenen Meßwerten eine Durchsatzänderung des Rohstoffmaterials, also des Volumens der Schmelzeströme auszulösen. Des weiteren hat man auch die Möglichkeit, mit derartigen Meßdaten die Abzugsgeschwindigkeit der Flachfolien oder Platten aus dem Breitschlitzwerkzeug zu verändern, siehe hierzu beispielsweise die DE-OS 31 07 701. Eine Möglichkeit zum Verstellen der Strömungsquerschnitte der zu einem Hauptstrom koextrudierten Schmelzeströme für eine mehrschichtige Kunststoffbahn im Bereich der Adapterzuführung ist beispielsweise aus der DE-PS 37 41 793 bekannt geworden.

Eine andere Methode zur Regelung der Foliendicke von durch Extrusion hergestellten Flachfolien benutzt ebenfalls die Dickenmessung der aus einer Breitschlitzdüse extrudierten oder mit dieser beschichteten Flachfolie über deren Breite, um mit den erhaltenen Meßdaten die Breitschlitzdüse in den zugeordneten Bereichen zusätzlich zu erwärmen oder zusätzlich zu kühlen, um eine entsprechende Veränderung der Dickenverteilung, d.h. des Schmelzestromes zu bewirken, siehe beispielsweise DE-OS 30 06 566.

Sofern Dickenmeßwerte für die Regelung der Schichtdicken von koextrudierten mehrschichtigen Kunststoffbahnen bzw. auch einschichtigen Kunststoffbahnen benutzt werden, werden jeweils die nach Austritt aus dem Breitschlitzwerkzeug erhaltenen Dicken gemessen. Insbesondere bei mehrschichtigen Kunststoffbahnen ist es schwierig, die Schmelzeströme hinreichend genau zu steuern, um auch bei vielschichtigen Kunststoffbahnen, die zu sehr dünnen Verpackungsfolien ausgezogen werden, wobei die einzelnen Schichtdicken bis zu 2 µ in einem dem Breitschlitzwerkzeug nachgeschalteten Chill-Roll-Verfahren heruntergefahren werden. Der Erfindung liegt daher die Aufgabe zugrunde, eine verbesserte Möglichkeit zum Regeln der einzelnen Schichtdicken von koextrudierten mehrschichtigen Kunststoffbahnen zu schaffen, um auch bei vielschichtigen Kunststoffbahnen, bei denen einzelne Schichten relativ geringe Dicken aufweisen, eine gleichmäßige Dickenverteilung zu gewährleisten und insbesondere auch Leerstellen durch Schichtrisse zu vermeiden.

Erfindungsgemäß wird diese Aufgabe durch die Merkmale des Anspruches 1 gelöst. Das erfindungsgemäße Verfahren benutzt also erstmalig Meßdaten, die die Schichtdicken der einzelnen koextrudierten Schichten vor dem Austritt aus dem Breitschlitzwerkzeug, d.h. vor Verlassen der Breitschlitzdüse, im noch schmelzflüssigen Zustand der Massen der einzelnen Schichten gewonnen werden. Die Erfindung beruht auf der Überlegung, daß je näher die Meßstelle zum Erfassen der einzelnen Schichtdicken nach der Vereinigungsstelle der einzelnen Schmelzeströme zu einem mehrschichtigen Strang zugeordnet ist, desto schneller eine nachfolgende Regelung bzw. Einwirkung auf die Strömungsverhältnisse, sowohl in bezug auf die Veränderung von Strömungsquerschnitten als auch in Verbindung mit der Veränderung von Durchsatzmengen für die einzelnen betroffenen Schichten gezielter und definierter vorgenommen werden können. Bisher sind lediglich Temperaturmessungen von Schmelzeströmen innerhalb des Breitschlitzdüsenwerkzeuges, insbesondere im Düsenlippenbereich, zum Erhalt von Meßdaten vorgenommen worden, jedoch blieben die Verteilung der einzelnen Schmelzeströme auf die verschiedenen Schichten und die noch im Werkzeug vorhandenen Schichtdicken unbeachtet.

Das Ermitteln der Schichtdicken der von den verschiedenen Schmelzeströmen gebildeten und in einem Strang zusammengeführten Schichten wird bevorzugt mittels Ultraschallimpulsen nach dem Impulsechoprinzip aus den Laufzeitunterschieden der Echoimpulse durchgeführt.

Ultraschallmeßanordnungen für die Abstandsmessung oder die Dickenmessung sind grundsätzlich bekannt, wozu nur beispielsweise auf die DE-OS 36 39 228, die DE-OS 34 29 764 oder die EP-OS 0146829 verwiesen wird.

Auch für das erfindungsgemäße Verfahren werden die von den einzelnen Schichten reflektierten Ultraschall-Echoimpulse mit einer einen Sender und Empfänger enthaltenden Ultraschallsonde empfangen und in elektrische Signale umgewandelt. Auf diese Weise kann dann die Lage bzw. die Kontur der Schichten, d.h. ihre Dicke, ohne einen direkten mechanischen Kontakt untersucht und ermittelt werden, wobei die Amplituden- bzw. die Laufzeitunterschiede der reflektierten Echosignale Aufschluß über die Entfernung des Objektes, d.h. der Schichten von der Ultraschallsonde geben. Es ist auch möglich, zur Ermittlung der Schichtdicken nicht nur die Laufzeitunterschiede der nacheinander reflektierten Echoimpulse eines ausgesendeten Ultraschallimpulses zu ermitteln, gegebenenfalls hierzu die Amplitude oder auch die Länge der Halbwellen der reflektierten Echoimpulse zu vermessen und zur Auswertung mit heranzuziehen.

Vorteilhafte Ausgestaltungen und Weiterbildungen des erfindungsgemäßen Verfahrens sind den kennzeichnenden Merkmalen der Unteransprüche entnehmbar.

Mit Vorteil sind die Meßeinrichtungen in Gestalt von Ultraschallsonden unmittelbar mit der Oberfläche der äußersten Schicht des zu messenden Stranges in Berührung zu bringen, so daß sie insbesondere bündig mit der Wandung des Fließkanales für den Strang im Adapter bzw. Breitschlitzwerkzeug abschließen. Die Meßstellen können auch auf einander gegenüberliegenden Seiten des Fließkanals, z.B. bei sehr dickem Strang angeordnet werden. Die Schichtdicken der Schichten des mehrschichtigen Stranges können unmittelbar nach der Vereinigung mit der letzten der Schichten noch innerhalb des Adapterbereiches vor dem Austritt des Stranges in das Breitschlitzwerkzeug ermittelt werden oder unmittelbar nach Eintritt in das Breitschlitzwerkzeug oder aber auch im Bereich der Vorlaufzone des Breitschlitzwerkzeuges, gegebenenfalls kurz vor dem Austreten aus dem Breitschlitzwerkzeug der Düsenlippenzone. Das erfindungsgemäße Regelungsverfahren unter Verwertung der Schichtdickenmessung im Werkzeug bzw. Adapter kann auch mit weiteren Meßdaten, die über andere Meßgrößen, wie Temperaturprofile etc., ermittelt werden, für die Regelung der Schichtdickenextrusion und des Fließverhaltens der einzelnen Schmelzen kombiniert werden.

Die Erfindung wird in der Zeichnung beispielhaft erläutert. Es zeigen
- Figur 1: schematische Darstellung eines Koextrusionswerkzeuges für mehrschichtige Kunststoffbahnen im Längsschnitt
- Figur 2: den Schnitt I/I nach Figur 1 im Anschlußadapterbereich
- Figur 3: schematische Darstellung der Ultraschallimpuls-Echoimpulse für die Schichten nach Figur 2
- Figur 4: Regelkreis für die Schichtdickenregelung der koextrudierten Kunststoffbahn
- Figur 5: Längsschnitt durch ein komplettes Koextrusionswerkzeug analog Figur 1
- Figur 6: Längsschnitt durch eine Breitschlitzdüse mit Ultraschallsonden
- Figur 7: Aufsicht auf den Düsenkanal gemäß Schnitt II/II von Figur 6.

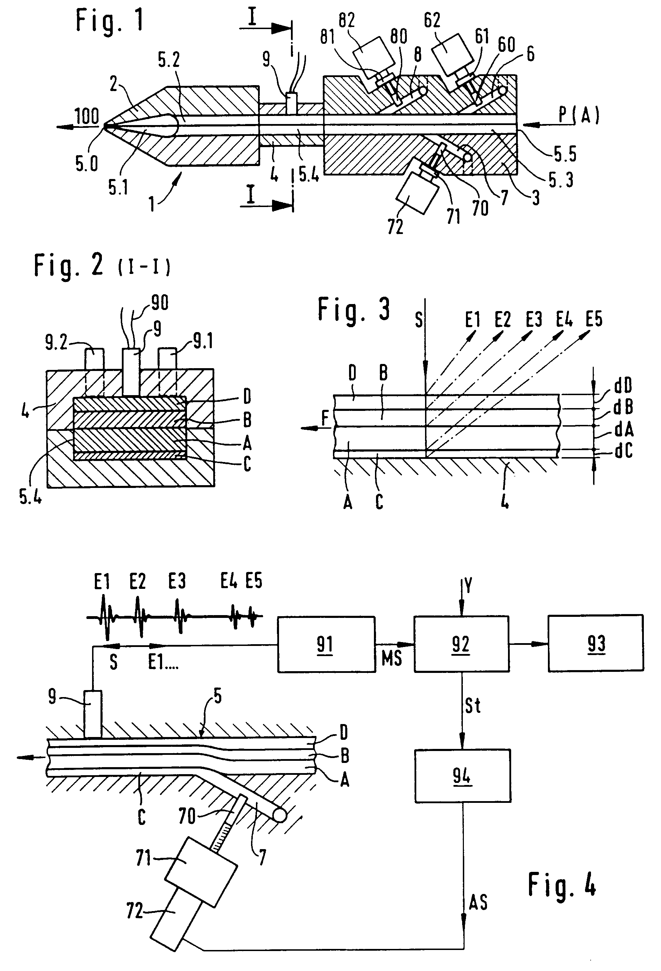

In der Figur 1 ist schematisch ein Koextrusionswerkzeug 1 mit Breitschlitzwerkzeug 2, Koextrusionsadapter 3 für vier Schmelzeströme und Anschlußadapter 4 zwischen Breitschlitzwerkzeug und Koextrusionsadapter dargestellt. Der Hauptschmelzestrom A wird in Pfeilrichtung P von einem nicht dargestellten Extruder über den Anschlußkanal 5.5 dem Koextrusionsadapter zugeführt. Der in Pfeilrichtung P durch das Koextrusionswerkzeug 1 verlaufende Hauptströmungskanal gliedert sich in die verschiedenen Bereiche zum einen des Verbundkanals 5.3 in dem Adapter 3, in dem die Nebenkanäle sind, die Schmelzeströme A, B, C, D bereits schichtweise übereinander gelagert zu einem Strang vereinigt. Anschließend gelangt der geschichtete Schmelzestrang in den Verteilerkanal 5.2 des Breitschlitzwerkzeuges. Über die Vorlaufzone 5.1 und den Düsenlippenbereich 5.0 verläßt die nunmehr zu einer breiten mehrschichtigen Kunststoffbahn 100 geformte Schmelze die Breitschlitzdüse, um zum Beispiel einer Gießwalze zum Herstellen dünner Folien zugeführt zu werden. Die Nebenkanäle 6, 7, 8, auch Koextrusionskanäle genannt, sind im Bereich des Auftreffens der Schmelzeströme auf den im Strömungskanal 5.3 befindlichen Schmelzestrom mit verstellbaren Schieberelementen 60,70, 80, ähnlich einem Staubalken, ausgestattet. Durch verstellen der Schieberelemente sind die Strömungsquerschnitte veränderbar. Die verstellbaren Schieberelemente werden mittels Stellelementen 61, 71, 81, beispielsweise Stellschrauben, verstellt, die beispielsweise mittels elektrischer Antriebe 62, 72, 83 verstellbar sind. Zur Regelung der Schichtdicken in der hergestellten das Breitschlitzwerkzeug 2 verlassender mehrschichtigen Kunststoffbahn 100, und zwar jeder einzelnen der in dieser Bahn zu einer Bahn vereinigten Schichten, ist die Erfassung der Schichtdicken der zu einem Strang geschichteten Schmelzeströme innerhalb des Koextrusionswerkzeuges 1 vorgesehen, beispielsweise im Bereich vor dem Einlaufen in das Breitschlitzwerkzeug, d.h. im Bereich des Anschlußadapters 4 oder noch im Bereich des Koextrusionsadapters 3. Hierbei sind Meßeinrichtungen, beispielsweise in Gestalt einer oder mehrerer über die Breite des Stranges verteilt angeordnete Ultraschallsonden 9 so angeordnet, daß der Ultraschallsender unmittelbar mit der Oberfläche des Stranges, der durch den Strömungskanal 5.3, 5.4 fließt, in Berührung kommt. Die Meßsonden können von beiden Seiten an den Kanal herangeführt sein, um von verschiedenen Seiten die Messungen durchzuführen.

In der Figur 2 ist schematisch die Ansicht für die Anordnung der Ultraschallsonde 9 bzw. weiterer Ultraschallsonden 9.1, 9.2 dargestellt, wobei der Schmelzestrang aus den übereinandergelegten Schichten D, B, A, C besteht. Mittels der Ultraschallsonde 9 kann nun die Dicke jeder einzelnen der Schichten A, B, C, D ermittelt werden, ebenso das Dickenprofil quer zur Strömungsrichtung und aus dem so erhaltenen Meßdaten durch einen Soll-Ist-Wert-Abgleich die notwendigen Veränderungen der Strömungsverhältnisse für die einzelnen Schmelzeströme im Adapter 3, d.h. in den Strömungskanälen 6, 7, 8 und 5.5, verändert werden, um das gewünschte Dickenprofil für jede der Schichten der Kunststoffbahn 100 zu erhalten.

Die Ultraschallsonde 9 arbeitet, wie in der Figur 3 schematisch dargestellt ist, in der Weise, daß sie gleichzeitig Sender und Empfänger ist und der ausgesandte Ultraschallimpuls S an jeder der Schichten D, B, A, C und der Wand des Fließkanals, hier des Anschlußadapters 4, reflektiert wird, wodurch die nacheinander mit unterschiedlicher Amplitude und Frequenz zurücklaufenden Echoimpulse E1, E2, E3, E4, E5 erhalten werden. Entsprechend der unterschiedlichen Laufzeiten der Echoimpulse E1 bis E5, gegebenenfalls der zusätzlichen Auswertung ihrer Amplituden und oder Halbwellenlänge, ist es möglich, die einzelnen Dicken dD, dB, dA, dC der einzelnen Schichten B, D, A, C im Strömungskanal 5.4 zu ermitteln.

In der Figur 4 ist beim Regelkreis dargestellt, wie die mit der Ultraschallsonde 9 ermittelten Echosignale S1 bis S5 in einer Signalverarbeitungseinheit ausgewertet und digitalisiert als Meßsignal MS einem Rechner 92 eingegeben werden. In diesem Rechner werden auch die Soll-Wert-Vorgaben für die einzelnen Schichtdicken V eingegeben und hieraus die notwendigen Veränderungen in den Fließquerschnitten, d.h. Strömungsquerschnitten der einzelnen Schmelzeströme A bis D, errechnet. Die Beeinflussung der einzelnen Schmelzeströme zur Regulierung der erzielbaren Schichtdicken geschieht einerseits über die Verstellung der Strömungsquerschnitte mit Hilfe der Schieber für die Strömungskanäle 6, 7, 8 und des weiteren auch über die Durchsatzmengenregelung an den einzelnen Extrudern für die einzelnen Schmelzeströme. Entsprechend geht von dem Rechner 92 auch ein Signal an den Durchsatzrechner für die Rohstoffversorgung der einzelnen Extruder 93 und ein weiteres Stellsignal ST auf die Verstelleinrichtung 94 der Schieberelemente 60, 70, 80 der einzelnen Koextruder. Das hier erhaltene Arbeitssignal AS wird als Steuersignal dann auf die Antriebselemente 62, 72, 82 der den einzelnen Koextrusionskanälen zugeordneten Schieberelemente gegeben.

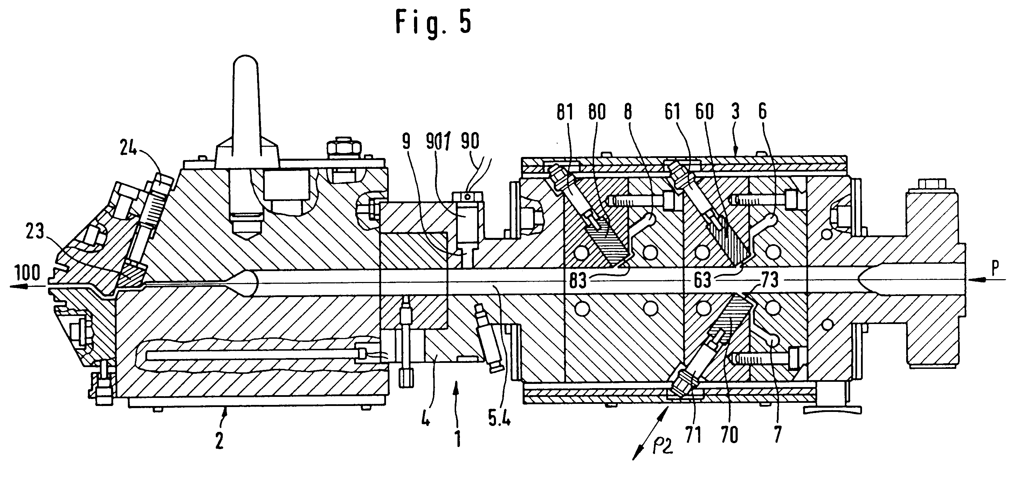

In der Figur 5 ist ein Koextrusionswerkzeug 1 mit konstruktiven Details im Längsschnitt dargestellt, das dem prinzipiellen Aufbau nach Figur 1 entspricht. Der Einbau der Ultraschallsonde 9 in den Adapterbereich des Anschlußadapters 4 im Verbundkanal 5.4 zum Erfassen der einzelnen Schichtdicken der zu einem Strang zusammengeführten koextrudierten Schichten wird ersichtlich. Die Ultraschallsonde 9 ist im weiteren Bereich von einer Hülse 901 umgeben, ebenfalls sind die Anschlüsse 90 angedeutet, die zu der Signalverarbeitungseinrichtung und dem Ultraschallimpulsgeber führen. Der Koextrusionsadapter 3, der drei Koextrusionskanäle 6, 7, 8 für drei auf den Hauptschmelzestrom A aufzulegende Schichten umfaßt, ist mit seinen verstellbaren Elementen 60, 70, 80 dargestellt. Es sind die als Stellschrauben 61, 71, 81 ausgebildeten Stellelemente dargestellt, die nunmehr über einen geregelten nicht dargestellten Antrieb, siehe Figur 4, verstellt werden. Durch die Verstellung der Schieberelemente 70, 80, 60 in Pfeilrichtung P2, beispielsweise bei Schieber 70, werden die Strömungsquerschnitte 73 bzw. 63, 83 der einzelnen Koextrusionskanäle verändert, entsprechend den gewünschten Schichtdicken B, C, D, A. Die Breitschlitzdüse 2 ist hier mit einem Staubalken 23, der mittels der Druckschrauben 24 verstellbar ist, ausgerüstet. Die Meßsonden 9 zum Ermitteln der Schichtdicke der einzelnen Schichten des Schmelzestranges können nicht nur im Bereich des Koextrusionsadapters 3 oder Anschlußadapters 4 sondern auch im Bereich des Breitschlitzwerkzeuges 2 angeordnet sein.

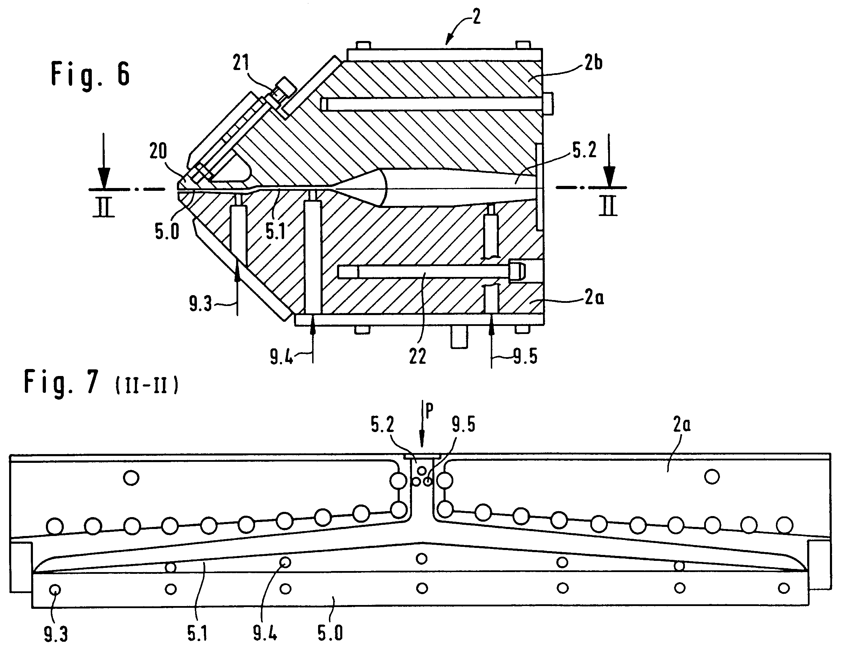

In der Figur 6 sind hierzu beispielhaft die Ultraschallsonden 9.3 im Bereich des Verteilerkanals des Breitschlitzwerkzeuges, die Ultraschallsonde 9.4 im Bereich der Vorlaufzone und die Ultraschallsonde 9.3 im Düsenlippenbereich vorgesehen.

In der Figur 7 ist die Ansicht II/II nach Figur 6, d.h. in der Aufsicht auf das Unterteil 2a der aufgeklappten Breitschlitzdüse in verkleinerter Darstellung dargestellt. Hieraus sind ebenfalls die Anordnung von Ultraschallsonden 9.3, 9.4 und 9.5 in verschiedenen Bereichen des Strömungsquerschnittes der Breitschlitzdüse angedeutet, wobei jeweils in einem Bereich, beispielsweise in der Vorlaufzone, mehrere Ultraschallsonden 9.4 über den Querschnitt verteilt, vorgesehen sind. Für die Regelung der Schichtdicken ist mindestens ein Meßort erforderlich, d.h. entweder im Verteilerkanal oder in der Vorlaufzone oder im Düsenlippenbereich 5.0. Die Breitschlitzdüse nach Figur 6 besteht aus dem Oberteil 2b und dem Unterteil 2a und weist im Bereich des Düsenaustrittes die flexible Lippe 20 auf, die mittels der Druckschraube 21 verstellbar ist.

## Patentansprüche

1. Verfahren zum Regeln der einzelnen Schichtdicken (dA, dB, dC, dD) von mehreren Schichten A,B,C,D einer mehrschichtigen durch Koextrusion herzustellenden Kunststoffbahn (100), wobei mindestens zwei Kunststoffschmelzeströme getrennt in einem oder verschiedenen Extrudern aufgeschmolzen und die einzelnen Schmelzeströme in einem Adapter zusammengeführt und zu einem Strang schichtweise aufeinandergelegt werden und der so gebildete mehrschichtige Strang einem Breitschlitzwerkzeug (2) zur Ausformung der mehrschichtigen Kunststoffbahn 100 zugeführt wird und Mittel vorgesehen sind, um den Fluß der einzelnen Schmelzeströme unmittelbar vor dem Zusammenführen der Schmelzeströme im Adapter durch Verändern der Strömungsquerschnitte zu steuern, um sowohl die Dickenverteilung der von jedem Schmelzestrom gebildeten und beim Zusammenführen auf den Strang aufgelegten Schicht als auch die Fließgeschwindigkeit zu beeinflussen, **dadurch gekennzeichnet**, daß die Schichtdicken (dA, dB, dC, dD) der den verschiedenen Schmelzeströmen entsprechenden einzelnen Schichten (A,B,C,D) des mehrschichtigen Stranges vor dem Austritt aus dem Breitschlitzwerkzeug (2) ermittelt und die erhaltenen Meßdaten ausgewertet, digitalisiert und die hieraus erhaltenen Meßsignale mit ebenfalls digitalisierten Sollwertvorgaben für die Dicken der einzelnen Schichten (A,B,C,D) verglichen werden und bei Abweichungen des Soll-Ist-Wert-Vergleiches das Ergebnis zum Verändern der Strömungsquerschnitte (63, 73, 83) für die einzelnen Schmelzeströme (B,C,D) unmittelbar vor dem Zusammenführen der Schmelzeströme zu einem Strang verwendet wird.

2. Verfahren nach Anspruch 1,
**dadurch gekennzeichnet**, daß die Schichtdicken der von den verschiedenen Schmelzeströmen gebildeten und in einem Strang zusammengeführten, d.h. aufeinandergelegten Schichten mittels Ultraschallimpulsen nach dem Impulsechoprinzip aus den Laufzeitunterschieden ermittelt werden.

3. Verfahren nach Anspruch 1 oder 2,
**dadurch gekennzeichnet,** daß zusätzlich die Amplituden- oder Frequenzunterschiede der empfangenen Echosignale ausgewertet werden.

4. Verfahren nach einem der Ansprüche 1 bis 3,
**dadurch gekennzeichnet,** daß zum Erfassen der Schichtdicke der einzelnen Schichten (A,B,C,D) Ultraschallsonden zum Aussenden von Ultraschallimpulsen und Empfangen der vom Objekt bzw. den Schichten reflektierten Echoimpulse eingesetzt werden.

5. Verfahren nach Anspruch 4,
**dadurch gekennzeichnet,** daß die Ultraschallsonden unmittelbar mit der Oberfläche der äußersten Schicht des zu messenden Stranges in Berührung gebracht werden, insbesondere bündig mit der Wandung des Fließkanals für den Strang im Adapter bzw. Breitschlitzwerkzeug abschließen.

6. Verfahren nach einem der Ansprüche 1 bis 4,
**dadurch gekennzeichnet,** daß ein Dickenprofil quer zur Strömungsrichtung (P) für jede Schicht (A,B,C,D) mittels mehrerer über die Breite des Stranges verteilt angeordneter Meßpunkte ermittelt wird.

7. Verfahren nach einem der Ansprüche 1 bis 6,
**dadurch gekennzeichnet,** daß die Schichtdicken der Schichten des mehrschichtigen Stranges unmittelbar nach der Vereinigung mit der letzten der Schichten noch innerhalb des Adapterbereiches vor Eintritt des Stranges in das Breitschlitzwerkzeug ermittelt werden.

8. Verfahren nach einem der Ansprüche 1 bis 6,
**dadurch gekennzeichnet**, daß die Schichtdicken der Schichten des mehrschichtigen Stranges unmittelbar nach Eintritt des Stranges in das Breitschlitzwerkzeug ermittelt werden.

9. Verfahren nach einem der Ansprüche 1 bis 6,
**dadurch gekennzeichnet**, daß die Schichtdicken der Schichten des mehrschichtigen Stranges im Bereich der Vorlaufzone des Breitschlitzwerkzeuges ermittelt werden.

10. Verfahren nach einem der Ansprüche 1 bis 6,
**dadurch gekennzeichnet**, daß die Schichtdicken der Schichten des mehrschichtigen Stranges im Bereich der Düsenlippenzone des Breitschlitzwerkzeuges ermittelt werden.

11. Verfahren nach einem der Ansprüche 2 bis 10,
**dadurch gekennzeichnet**, daß die Ultraschallsonde mit einer Steuervorrichtung zur Steuerung der auszusendenden Ultraschallimpulse und einer Signalverarbeitungseinheit zum Erfassen und Auswerten der vom Objekt reflektierten Echoimpulse ausgerüstet ist und die ausgesendeten Ultraschallimpulse auf mindestens zwei unterschiedlich weit vom Aussendeort liegende reflektierende Flächen auftreffen und die Signalverarbeitungseinheit imstande ist, für einen ausgesandten Ultraschallimpuls die Größen von mindestens zwei zugehörigen Echoimpulsen zu vergleichen, die von reflektierenden Flächen unterschiedlicher Entfernung zum Aussendeort stammen und in Abhängigkeit von dem Vergleich ein Meßsignal erzeugt, welches ein Maß für die Dicke der jeweiligen erfaßten Schicht ist und das so erhaltene Meßsignal in digitalisierter Form mit digitalisierten Sollwertvorgaben in einem Rechner verglichen wird und bei Abweichungen des Soll-Ist-Wertes das Ergebnis zum Verändern der Strömungsquerschnitte (63, 73, 83) in Teilbereichen oder Gänze der Schmelzeströme im Adapter und zum Verändern des Durchsatzes der einzelnen Extruder für die Schmelzeströme der einzelnen Schichten (A,B,C) verwendet wird.

## Claims

1. Method for regulating the individual layer thicknesses (dA, dB, dC, dD) of a plurality of layers (A, B, C, D) of a multi-layer plastics sheet (100) which is to be produced by coextrusion, with at least two plastics melt streams being melted separately in one or several extruders and the individual melt streams being brought together in an adapter and placed one on top of the other in layers to form a web, and the multi-layer web formed in this way being supplied to a wide slit tool (2) for shaping the multi-layer plastics sheet (100), and with there being provided means for controlling the flow of the individual melt streams directly before said melt streams are brought together in the adapter by altering the flow cross-sections in order to influence both the thickness distribution of the layer which is formed by each melt stream and placed on the web during the bringing together and also by the rate of flow, characterised in that the layer thicknesses (dA, dB, dC, dD) of the individual layers (A, B, C, D) of the multi-layer web, which layers correspond to the various melt streams, are established before the exit from the wide slit tool (2), and the measurement data obtained are evaluated and digitalised, and the measurement signals accordingly obtained are compared with likewise digitalised nominal value entries for the thicknesses of the individual layers (A, B, C, D), and in the case of deviations of the nominal/actual-value comparison, the result is used to alter the flow cross-sections (63, 73, 83) for the individual melt streams (B, C, D) directly before the said melt streams are brought together to form a web.

2. Method according to claim 1, characterised in that the layer thicknesses of the layers, which are formed by the various melt streams and brought together in a web, i.e. are placed one on top of the other, are established by means of ultrasound pulses according to the pulse echo principle, from the delay time differences.

3. Method according to claim 1 or 2, characterised in that the amplitude differences or frequency differences of the echo signals which are received are additionally evaluated.

4. Method according to one of the claims 1 to 3, characterised in that ultrasonic probes for emitting ultrasound pulses and receiving the echo pulses reflected by the object or the layers are used to detect the layer thickness of the individual layers (A, B, C, D).

5. Method according to claim 4, characterised in that the ultrasonic probes are brought directly into contact with the surface of the outermost layer of the web to be measured, in particular ending snug with the wall of the flow channel for the web in the adapter or wide slit tool.

6. Method according to one of the claims 1 to 4, characterised in that a thickness profile is established at right angles to the flow direction (P) for each layer (A, B, C, D) by means of several measurement points, which are distributed over the width of the web.

7. Method according to one of the claims 1 to 6, characterised in that the layer thicknesses of the layers of the multi-layer web are established directly after the uniting with the last of the layers, while still inside the adapter region, before the web enters into the wide slit tool.

8. Method according to one of the claims 1 to 6, characterised in that the layer thicknesses of the layers of the multi-layer web are established directly after entry of the web into the wide slit tool.

9. Method according to one of the claims 1 to 6, characterised in that the layer thicknesses of the layers of the multi-layer web are established in the region of the forward zone of the wide slit tool.

10. Method according to one of the claims 1 to 6, characterised in that the layer thicknesses of the layers of the multi-layer web are established in the region of the nozzle-lip zone of the wide slit tool

11. Method according to one of the claims 2 to 10, characterised in that the ultrasonic probe is provided with a control device for controlling the ultrasound pulses which are to be emitted and a signal processing unit for detecting and evaluating the echo pulses reflected by the object, and the ultrasound pulses which are emitted are incident upon at least two reflecting surfaces which are at different distances from the emission location, and the signal processing unit is capable of comparing, for an ultrasound pulse which has been emitted, the magnitudes of at least two associated echo pulses which originate from reflecting surfaces at different distances from the emission location, and as a function of the comparison generates a measurement signal, which is a measure of the thickness of the layer detected in each case, and the measurement signal obtained in this way is compared, in digitalised form, with digitalised nominal entries in a computer, and in the case of deviations of the nominal/actual-value, the result is used to alter the flow cross-sections (63, 73, 83) in partial regions or the whole of the melt streams in the adapter and to alter the throughput of the individual extruders for the melt streams of the individual layers (A, B, C).

## Revendications

1. Procédé pour la régulation des épaisseurs (dA, dB, dC, dD) individuelles de plusieurs couches (A, B, C, D) d'une bande de matière synthétique (100) en plusieurs couches à fabriquer par coextrusion, dans lequel au moins deux écoulements de matière synthétique fondue sont mis en fusion séparément dans une ou plusieurs extrudeuses, les écoulements fondus individuels étant rassemblés dans un adaptateur et déposés en couches superposées pour former un barreau, le barreau en plusieurs couches ainsi formé étant amené dans un outil à fente large (2) pour former la bande de matière synthétique (100) en plusieurs couches, et dans lequel sont prévus des moyens pour, par modification des sections transversales d'écoulement, contrôler l'écoulement des écoulements fondus individuels immédiatement en amont du rassemblement des écoulements fondus dans l'adaptateur, pour ainsi agir sur la répartition des épaisseurs et la vitesse d'écoulement de la couche formée par chaque écoulement fondu et déposée lors du rassemblement sur le barreau, caractérisé en ce que les épaisseurs (dA, dB, dC, dD) des couches individuelles (A, B, C, D), qui correspondent aux différents écoulements fondus, du barreau en plusieurs couches sont déterminées avant leur sortie de l'outil à fente large (2), et les données de mesure obtenues sont évaluées et numérisées, et les signaux de mesure ainsi obtenus sont comparés à des données de consigne également numérisées des épaisseurs des couches (A, B, C, D) individuelles, et en cas d'écart entre les valeurs effectives et les valeurs de consigne lors de la comparaison, le résultat est utilisé pour modifier les sections transversales d'écoulement (63, 73, 83) des écoulements fondus individuels (B, C, D), immédiatement en amont du rassemblement des écoulements fondus en un barreau.

2. Procédé selon la revendication 1, caractérisé en ce que les épaisseurs des couches formées par les différents écoulements fondus et rassemblées en un barreau, c'est-à-dire superposées, sont déterminées au moyen d'impulsions d'ultrasons, à partir des différences de temps écoulé suivant le principe d'écho des impulsions.

3. Procédé selon les revendications 1 ou 2, caractérisé en ce que l'on évalue en plus les différences d'amplitude ou de fréquence des signaux d'écho reçus.

4. Procédé selon l'une des revendications 1 à 3, caractérisé en ce que pour déterminer l'épaisseur des couches individuelles (A, B, C, D), on utilise des sondes à ultrasons pour émettre des impulsions d'ultrasons et recevoir les impulsions d'écho réfléchies par l'objet ou par les couches.

5. Procédé selon la revendication 4, caractérisé en ce que les sondes à ultrasons sont mises en contact direct avec la surface de la couche extérieure du barreau à mesurer, en particulier à fleur de la paroi du canal d'écoulement du barreau dans l'adaptateur ou dans l'outil à fente large.

6. Procédé selon l'une des revendications 1 à 4, caractérisé en ce que pour chaque couche (A, B, C, D), on détermine un profil d'épaisseur transversalement à la direction d'écoulement (P), à l'aide de plusieurs points de mesure répartis sur la largeur du barreau.

7. Procédé selon l'une des revendications 1 à 6, caractérisé en ce que les épaisseurs des couches du barreau en plusieurs couches sont déterminées immédiatement en aval de la réunion avec la dernière des couches, encore à l'intérieur de la région de l'adaptateur qui est située en amont de l'entrée du barreau dans l'outil à lente large.

8. Procédé selon l'une des revendications 1 à 6, caractérisé en ce que les épaisseurs des couches du barreau en plusieurs couches sont déterminées immédiatement après l'entrée du barreau dans l'outil à lente large.

9. Procédé selon l'une des revendications 1 à 6, caractérisé en ce que les épaisseurs des couches du barreau en plusieurs couches sont déterminées dans la région d'amorçage de l'outil à lente large.

10. Procédé selon l'une des revendications 1 à 6, caractérisé en ce que les épaisseurs des couches du barreau en plusieurs couches sont déterminées dans la région des lèvres de la tuyère de l'outil à lente large.

11. Procédé selon l'une des revendications 2 à 10, caractérisé en ce que la sonde à ultrasons est équipée d'un dispositif de commande pour la commande des impulsions d'ultrasons à émettre, et d'une unité de traitement des signaux pour la détection et l'évaluation des impulsions d'écho réfléchies par l'objet, et en ce que les impulsions d'ultrasons émises viennent frapper au moins deux surfaces réfléchissantes situées à des distances différentes du lieu d'émission, et pour une impulsion d'ultrasons émise, l'unité de traitement des signaux est en mesure de comparer les grandeurs d'au moins deux impulsions d'écho associées qui proviennent de surfaces réfléchissantes situées à des distances différentes du lieu d'émission, et en fonction de la comparaison, il émet un signal de mesure qui constitue une mesure de l'épaisseur de la couche particulière étudiée, et dans un calculateur, le signal de mesure ainsi obtenu est comparé sous forme numérisée à des données de consigne numérisées, et en cas d'écart entre la valeur effective et la valeur de consigne, le résultat est utilisé pour modifier les sections transversales (63, 73, 83) de l'écoulement dans des parties ou la totalité des écoulements fondus dans l'adaptateur, et pour modifier le débit des extrudeuses individuelles fournissant les écoulements fondus des couches (A, B, C) individuelles.
